# EUROPEAN PATENT APPLICATION

(11) **EP 4 847 574 A1**
(43) Date of publication of application: **02.12.2026**
(21) Application number: 25757978.9
(22) Date of filing: 10.02.2025
(51) Int. Cl.: C09D 175/04, C08G 18/62, C08G 18/82, C09D 7/63

(54) **CATALYST COMPOSITION, BLOCKED POLYISOCYANATE COMPOSITION, COATING MATERIAL COMPOSITION, COATING FILM, AND METHOD FOR FORMING COATING FILM**

(30) Priority: 22.02.2024 JP 2024025320
(71) Applicant: Tosoh Corporation, Shunan-shi, Yamaguchi 746-8501 (JP)
(72) Inventor: NOGUCHI, Shuto, Yokkaichi-shi, Mie 510-8540 (JP); NAKASHIMA, Yuji, Yokkaichi-shi, Mie 510-8540 (JP)
(74) Representative: TBK
(86) International application number: PCT/JP2025/004319
(87) International publication number: WO 2025/177882

(57) **Abstract**

A catalyst composition used for dissociating a blocking agent from a blocked polyisocyanate, containing a quaternary ammonium salt and at least one compound selected from the group consisting of a hydroxylamine compound and an oxime compound.

## Description

### Technical Field

The present disclosure relates to a catalyst composition, a blocked polyisocyanate composition, a coating material composition, a coating film, and a method for forming a coating film.

### Background Art

Conventionally, polyisocyanates are known as curing agents used in coating materials and the like. For example, polyurethane resin coating materials in which a polyol and a polyisocyanate are combined are known to have extremely excellent abrasion resistance, chemical resistance, and stain resistance.

Coating materials using a polyisocyanate as a curing agent are generally two-component compositions, in which a main agent (for example, a polyol) and a polyisocyanate are stored separately and mixed at the time of application. However, since a coating material once mixed cures in a short period of time, the pot life is short, and there has been a problem in terms of workability during application. In addition, since polyisocyanate and water react readily, it has been impossible to use the above coating material in water-based coating materials such as electrodeposition coating materials.

As a method for addressing these problems, a method of inactivating a polyisocyanate by reacting it with a blocking agent is known. The blocked polyisocyanate obtained by this method does not react with the main agent (polyol, and the like) at room temperature, but when heated, the blocking agent dissociates to regenerate isocyanate groups, which then react with the main agent to form crosslinks. For this reason, according to the above method, the pot life is not limited, it becomes possible to prepare a coating material by mixing the main agent and the curing agent in advance, and it also becomes possible to apply polyisocyanate to water-based coating materials.

As a catalyst for dissociating a blocking agent from a blocked polyisocyanate (blocking agent dissociation catalyst), for example, quaternary ammonium salts are known (see Patent Literature 1).

### Citation List

### Patent Literature

[Patent Literature 1] Japanese Unexamined Patent Application Publication No. H08-170048

### Summary of Invention

### Technical Problem

According to the quaternary ammonium salt of the above Patent Literature 1, low-temperature curability can be imparted to a coating material composition containing a blocked polyisocyanate. On the other hand, quaternary ammonium salts tend to undergo color change (for example, yellowing) over time. Therefore, even if no discoloration occurs at the time of use, discoloration of the blocked polyisocyanate composition may be caused after the quaternary ammonium salt is mixed with the blocked polyisocyanate. Although the above Patent Literature 1 describes that a specific quaternary ammonium salt is also excellent in yellowing resistance, there is no description regarding color change over time caused by the quaternary ammonium salt, and the effect of yellowing resistance cannot be said to be sufficient.

Therefore, one aspect of the present disclosure aims to provide a catalyst composition that can not only impart low-temperature curability to a coating material composition containing a blocked polyisocyanate, but also suppress color change over time when formed into a blocked polyisocyanate composition. In addition, another aspect of the present disclosure aims to provide a blocked polyisocyanate composition, a coating material composition, a coating film, and a method for forming a coating film, each using the catalyst composition.

### Solution to Problem

The present disclosure provides at least the following [1] to [11].
[1] A catalyst composition used for dissociating a blocking agent from a blocked polyisocyanate,
   containing a quaternary ammonium salt and at least one nitrogen-containing compound selected from the group consisting of a hydroxylamine compound and an oxime compound.
[2] The catalyst composition according to [1], wherein a ratio of the content of the nitrogen-containing compound to the content of the quaternary ammonium salt is 0.05 to 6.0 in terms of mass ratio.
[3] The catalyst composition according to [1] or [2], wherein the quaternary ammonium salt contains a quaternary ammonium cation represented by the following formula (1). 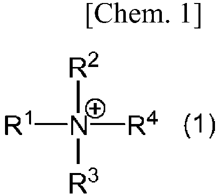 [In formula (1), R¹ represents an alkyl group having 1 to 16 carbon atoms which may have a hydroxy group, an amino group, or an alkoxy group as a substituent, and R² to R⁴ each independently represent an alkyl group having 1 to 8 carbon atoms.]
[4] The catalyst composition according to any one of [1] to [3], wherein the nitrogen-containing compound contains a hydroxylamine compound represented by the following formula (2). 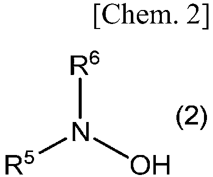 [In formula (2),
   R⁵ and R⁶ each independently represent
      a hydrogen atom, or
      a linear or branched hydrocarbon group having 1 to 16 carbon atoms which may have one or more substituents,
   and R⁵ and R⁶ may be linked to each other to form a ring.]
[5] A blocked polyisocyanate composition containing a blocked polyisocyanate and the catalyst composition according to any one of [1] to [4].
[6] The blocked polyisocyanate composition according to [5], wherein the content of the quaternary ammonium salt is 0.0001 to 40 parts by mass relative to 100 parts by mass of the blocked polyisocyanate.
[7] The blocked polyisocyanate composition according to [5] or [6], wherein the blocked polyisocyanate includes a structure derived from an aliphatic polyisocyanate having an aliphatic hydrocarbon group having 4 to 6 carbon atoms or a derivative thereof.
[8] The blocked polyisocyanate composition according to any one of [5] to [7], wherein the blocked polyisocyanate has at least one group selected from the group consisting of an isocyanate group blocked with an oxime-based blocking agent and an isocyanate group blocked with a pyrazole-based blocking agent.
[9] A coating material composition containing a main agent and a curing agent,
   containing a blocked polyisocyanate and the catalyst composition according to any one of [1] to [4], or containing the blocked polyisocyanate composition according to any one of [5] to [8].
[10] A coating film formed from the coating material composition according to [9].
[11] A method for forming a coating film, including a step of applying the coating material composition according to [9] or [10] to an object to be coated and heating at 60 to 100°C to cure a coating film composed of the coating material composition.

### Advantageous Effects of Invention

According to one aspect of the present disclosure, it is possible to provide a catalyst composition that can not only impart low-temperature curability to a coating material composition containing a blocked polyisocyanate, but also suppress color change over time when formed into a blocked polyisocyanate composition. In addition, according to another aspect of the present disclosure, it is possible to provide a blocked polyisocyanate composition, a coating material composition, a coating film, and a method for forming a coating film, each using the catalyst composition.

### Description of Embodiments

Hereinafter, exemplary embodiments of the present disclosure will be described. However, the present disclosure is not limited in any way to the following embodiments. Here, in the present specification, when a numerical range is indicated using "to," it means a range including numerical values stated before and after "to" as a minimum value and a maximum value, respectively. In addition, unless otherwise specified, units of numerical values stated before and after "to" are the same. In addition, the upper limit value and the lower limit value described individually can be arbitrarily combined. In addition, materials exemplified below may be used alone or in combination of two or more, unless otherwise specified. The content of each component in a composition means the total amount of the plurality of substances present in the composition that correspond to each component, unless otherwise specified, when a plurality of substances corresponding to each component are present in the composition.

### <Catalyst composition>

One embodiment of the present disclosure is a catalyst composition containing a quaternary ammonium salt and at least one nitrogen-containing compound selected from the group consisting of a hydroxylamine compound and an oxime compound (hereinafter also referred to as "nitrogen-containing compound (A)"). The catalyst composition is used for dissociating a blocking agent from a blocked polyisocyanate.

According to the above catalyst composition, low-temperature curability can be imparted to a coating material composition containing a blocked polyisocyanate. Furthermore, the above catalyst composition can suppress color change over time when formed into a blocked polyisocyanate composition. Therefore, it can contribute to reducing color change during the production of a coating film (before and after curing of the coating film) and to forming a coating film with little coloration. The above catalyst composition may itself be unlikely to undergo color change over time, but surprisingly, it has been confirmed that some catalyst compositions, despite undergoing color change equal to or greater than that in the case where nitrogen-containing compound (A) is not used, exhibit an effect of suppressing color change over time when formed into a blocked polyisocyanate composition.

### (Quaternary ammonium salt)

A quaternary ammonium salt contains a quaternary ammonium cation as a cationic group. As the quaternary ammonium salt, a compound known as a blocking agent dissociation catalyst can be used.

The quaternary ammonium cation is represented, for example, by the following formula (1).

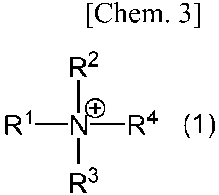

In formula (1), R¹ to R⁴ each independently represent a hydrocarbon group. R¹ to R⁴ may be the same as or different from each other.

The hydrocarbon group may be an aliphatic hydrocarbon group (for example, an alkyl group or a cycloalkyl group) or may be an aromatic hydrocarbon group (for example, an aryl group). From the viewpoint of enhancing the effect of improving low-temperature curability and from the viewpoint of enhancing the effect of reducing color change over time of the blocked polyisocyanate composition and coloration of the coating film, the hydrocarbon group may be an aliphatic hydrocarbon group. Among these, when the aliphatic hydrocarbon group is an alkyl group, the above effects tend to be further enhanced.

When the hydrocarbon group is an aliphatic hydrocarbon group, the number of carbon atoms thereof is, for example, 1 to 16. The number of carbon atoms of the aliphatic hydrocarbon group may be 3 or more or 6 or more, and may be 12 or less or 8 or less. When the hydrocarbon group is an aromatic hydrocarbon group, the number of carbon atoms thereof is, for example, 6 to 16. The number of carbon atoms of the aromatic hydrocarbon group may be 8 or more or 10 or more, and may be 14 or less or 12 or less.

The hydrocarbon group may have a substituent. Examples of substituents include a hydroxy group, an amino group, an alkoxy group, and the like. The number of carbon atoms of the alkoxy group may be, for example, 1 to 8, 1 to 6, 1 to 4, or 1 to 2. Examples of alkoxy groups include a methoxy group, an ethoxy group, a butoxy group, a propyloxy group, a pentyloxy group, a hexyloxy group, and the like. The number of substituents may be, for example, 0 to 3. Here, the number of carbon atoms of the substituent is included in the number of carbon atoms of the hydrocarbon group.

In one embodiment, R¹ in formula (1) represents an alkyl group having 1 to 16 carbon atoms which may have a hydroxy group, an amino group, or an alkoxy group as a substituent, and R² to R⁴ each independently represent an alkyl group having 1 to 8 carbon atoms. When such a quaternary ammonium salt is used, a coating material composition having better low-temperature curability is easily obtained.

Specific examples of the alkyl group represented by R¹ include a methyl group, an ethyl group, an n-propyl group, an isopropyl group, an n-butyl group, an isobutyl group, a t-butyl group, an n-pentyl group, an n-hexyl group, an n-heptyl group, an n-octyl group, a 2-ethylhexyl group, a 2-propylheptyl group, a nonyl group, a decyl group, an isodecyl group, a dodecyl group, a hexadecyl group, and the like. These groups may be substituted with one or two or more substituents (for example, a hydroxy group, an amino group, or an alkoxy group).

From the viewpoint of easily obtaining a coating material composition having even better low-temperature curability, R¹ in formula (1) may be an alkyl group having 1 to 16 carbon atoms having no substituent or a hydroxyalkyl group. Among these, when R¹ is an alkyl group having 1 to 16 carbon atoms having no substituent, the effect of improving low-temperature curability tends to be further enhanced. From the viewpoint of further enhancing this effect, the alkyl group having no substituent may be an alkyl group having 1 to 10 carbon atoms. In addition, when the alkyl group having 1 to 16 carbon atoms having no substituent is an alkyl group having 6 to 8 carbon atoms, the effect of improving low-temperature curability and the effect of reducing color change over time of the blocked polyisocyanate composition and coloration of the coating film tend to be further enhanced. This tendency is pronounced when the alkyl group is an alkyl group having 8 carbon atoms (particularly an n-octyl group).

Specific examples of the alkyl group represented by R² to R⁴ include a methyl group, an ethyl group, an n-propyl group, an isopropyl group, an n-butyl group, an isobutyl group, a t-butyl group, an n-pentyl group, an n-hexyl group, an n-heptyl group, an n-octyl group, a 2-ethylhexyl group, and the like.

From the viewpoint of easily obtaining a coating material composition having even better low-temperature curability, R² to R⁴ in formula (1) may be alkyl groups having 1 to 4 carbon atoms. The alkyl group having 1 to 4 carbon atoms is preferably an alkyl group having 1 to 2 carbon atoms, and more preferably a methyl group, from the viewpoint of further enhancing the effect of improving low-temperature curability.

From the above-described viewpoints, the quaternary ammonium cation may be a cation in which R¹ in formula (1) is an alkyl group having 1 to 10 carbon atoms and R² to R⁴ are alkyl groups having 1 to 4 carbon atoms. Specific examples of such cations include a trimethylmono-n-octylammonium cation, a trimethylmono-n-butylammonium cation, a tetramethylammonium cation, and a tetrabutylammonium cation. Among these, when the quaternary ammonium cation is a trimethylmono-n-octylammonium cation, the effect of improving low-temperature curability and the effect of reducing color change over time of the blocked polyisocyanate composition and coloration of the coating film tend to be further enhanced.

The anionic group of the quaternary ammonium salt may be a group composed of an anion derived from an acid such as an organic acid group or an inorganic acid, or may be a group composed of an anion derived from an ester such as a carbonic acid ester. The anionic group of the quaternary ammonium salt may also be a group not classified into any of these (for example, a hydroxyl group (hydroxide ion)).

Examples of groups composed of anions derived from organic acids (organic acid groups) include fatty acid groups. The number of carbon atoms of the fatty acid group (aliphatic monocarboxylic acid group) may be, for example, 1 to 12, and may be 1 to 7 or 1 to 3. Specific examples of fatty acid groups include a formate group, an acetate group, a 2-ethylhexanoate group (octylate group), a laurate group, a cyclohexanecarboxylate group, a pivalate group, and the like.

Examples of groups composed of anions derived from inorganic acids (inorganic acid groups) include a halogen group (a fluoro group, a chloro group, a bromo group, etc.), a bicarbonate group, and a carbonate group.

Examples of groups composed of anions derived from esters (ester groups) include a monoalkyl carbonate group. The number of carbon atoms of the alkyl group in the monoalkyl carbonate group may be, for example, 1 to 8, and may be 1 to 4 or 1 to 2. Specific examples of monoalkyl carbonate groups include a methyl carbonate group, an ethyl carbonate group, a propyl carbonate group, a butyl carbonate group, and the like.

The anionic group of the quaternary ammonium salt may be a fatty acid group having 1 to 12 carbon atoms, a monoalkyl carbonate group having an alkyl group having 1 to 8 carbon atoms, or a hydroxyl group, from the viewpoint of easily obtaining a coating material composition having better low-temperature curability. The anionic group may be a fatty acid group having 1 to 7 carbon atoms or a monoalkyl carbonate group having an alkyl group having 1 to 4 carbon atoms from the viewpoint of further enhancing the effect of improving low-temperature curability, and may be a monoalkyl carbonate group having an alkyl group having 1 to 2 carbon atoms from the viewpoint of further enhancing this effect.

From the above-described viewpoints, the quaternary ammonium salt may be composed of a combination of a quaternary ammonium cation represented by the above formula (1), in which R¹ in formula (1) represents an alkyl group having 1 to 16 carbon atoms which may have a hydroxy group, an amino group, or an alkoxy group as a substituent, and R² to R⁴ each independently represent an alkyl group having 1 to 8 carbon atoms, and a fatty acid group having 1 to 12 carbon atoms, a monoalkyl carbonate group having an alkyl group having 1 to 8 carbon atoms, or a hydroxyl group. Among these, a combination of a cation in which R¹ is an alkyl group having 1 to 10 carbon atoms and R² to R⁴ are alkyl groups having 1 to 4 carbon atoms, and a monoalkyl carbonate group having an alkyl group having 1 to 8 carbon atoms or a hydroxyl group is preferred, and a combination of a cation in which R¹ is an alkyl group having 4 to 8 carbon atoms and R² to R⁴ are alkyl groups having 1 to 2 carbon atoms, and a monoalkyl carbonate group having an alkyl group having 1 to 8 carbon atoms is more preferred.

Specific examples of quaternary ammonium salts include trimethylmono-n-octylammonium bicarbonate, trimethylmono-n-octylammonium methyl carbonate, trimethylmono-n-octylammonium carbonate, trimethylmono-n-butylammonium methyl carbonate, trimethylmono-n-butylammonium acetate, tetramethylammonium acetate, hexadecyltrimethylammonium hydroxide, tetramethylammonium hydroxide, tetraethylammonium hydroxide, tetrapropylammonium hydroxide, tetrabutylammonium hydroxide, trimethyl(2-hydroxypropyl)ammonium 2-ethylhexanoate, tetramethylammonium bicarbonate, tetraethylammonium bicarbonate, tetra-n-propylammonium bicarbonate, tetra-n-butylammonium bicarbonate, triethylmonomethylammonium bicarbonate, tri-n-propylmonomethylammonium bicarbonate, tri-n-butylmonomethylammonium bicarbonate, tri-n-butylmonoethylammonium bicarbonate, tetramethylammonium monomethyl carbonate, tetraethylammonium monoethyl carbonate, tetra-n-butylammonium monobutyl carbonate, triethylmonomethylammonium monomethyl carbonate, tri-n-propylmonomethylammonium monomethyl carbonate, tri-n-butylmonomethylammonium monomethyl carbonate, tri-n-butylmonoethylammonium monoethyl carbonate, tetramethylammonium carbonate, and tetra-n-butylammonium carbonate.

The quaternary ammonium salt contained in the catalyst composition may be one type or two or more types.

The content of the quaternary ammonium salt may be 10 mass% or more, and may be 20 mass% or more or 30 mass% or more, based on the total mass of the catalyst composition, from the viewpoint of easily obtaining a coating material composition having better low-temperature curability. The content of the quaternary ammonium salt may be 99 mass% or less, and may be 95 mass% or less or 90 mass% or less, based on the total mass of the catalyst composition, from the viewpoint of further reducing color change over time of the blocked polyisocyanate composition and coloration of the coating film. From these viewpoints, the content of the quaternary ammonium salt may be, for example, 10 to 99 mass% based on the total mass of the catalyst composition.

### (Nitrogen-containing compound)

### [Hydroxylamine compound]

The hydroxylamine compound is, for example, a compound represented by the following formula (2).

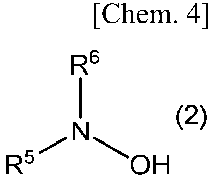

In formula (2), R⁵ and R⁶ each independently represent a hydrogen atom or a linear or branched hydrocarbon group having 1 to 16 carbon atoms which may have one or more substituents. In formula (2), R⁵ and R⁶ may be linked to each other to form a ring.

The hydrocarbon group may be a saturated or unsaturated aliphatic hydrocarbon group (for example, an alkyl group, an alkylene group, a cycloalkyl group, or a cycloalkylene group) or may be an aromatic hydrocarbon group (for example, an aryl group or an arylene group). From the viewpoint of further reducing color change over time of the blocked polyisocyanate composition and coloration of the coating film, the hydrocarbon group may be an aliphatic hydrocarbon group. As the aliphatic hydrocarbon group, an aliphatic saturated hydrocarbon group is preferred.

When the hydrocarbon group is an aliphatic hydrocarbon group, the number of carbon atoms thereof is, for example, 1 to 16. The number of carbon atoms of the aliphatic hydrocarbon group may be 1 or more or 2 or more, and may be 12 or less or 8 or less. When the hydrocarbon group is an aromatic hydrocarbon group, the number of carbon atoms thereof is, for example, 6 to 16. The number of carbon atoms of the aromatic hydrocarbon group may be 8 or more or 10 or more, and may be 14 or less or 12 or less.

The hydrocarbon group may have a substituent. Examples of substituents include a hydroxy group, an amino group, an alkoxy group, and the like. The number of carbon atoms of the alkoxy group may be, for example, 1 to 8, 1 to 6, 1 to 4, or 1 to 2. Examples of alkoxy groups include a methoxy group, an ethoxy group, a butoxy group, a propyloxy group, a pentyloxy group, a hexyloxy group, and the like. The number of substituents may be, for example, 0 to 3.

In one embodiment, R⁵ and R⁶ in formula (2) are each independently an alkyl group having 1 to 16 carbon atoms. When such a hydroxylamine compound is used, color change over time of the blocked polyisocyanate composition and coloration of the coating film can be further reduced.

The aliphatic saturated hydrocarbon groups of R⁵ and R⁶ may be alkyl groups. Specific examples of alkyl groups include a methyl group, an ethyl group, an n-propyl group, an isopropyl group, an n-butyl group, an isobutyl group, a t-butyl group, an n-pentyl group, an n-hexyl group, an n-heptyl group, an n-octyl group, a 2-ethylhexyl group, a 2-propylheptyl group, a nonyl group, a decyl group, an isodecyl group, a dodecyl group, a hexadecyl group, and the like.

The aliphatic saturated hydrocarbon groups of R⁵ and R⁶ may form an alkylene group by being linked to each other. Specific examples of alkylene groups formed by R⁵ and R⁶ being linked to each other include an ethylene group, a 1,2-propylene group, a 1,2-butylene group, a 2,3-butylene group, and the like.

From the viewpoint of further reducing color change over time of the blocked polyisocyanate composition and coloration of the coating film, R⁵ and R⁶ may each independently be an alkyl group having 1 to 4 carbon atoms. The alkyl group having 1 to 4 carbon atoms is preferably an alkyl group having 1 to 2 carbon atoms, and more preferably a methyl group.

Specific examples of hydroxylamine compounds include hydroxylamine, N,N-diethylhydroxylamine, N-isopropylhydroxylamine, N,N-dibutylhydroxylamine, N-t-butylhydroxylamine, and the like.

The hydroxylamine compound contained in the catalyst composition may be one type or two or more types.

The content of the hydroxylamine compound may be 1 mass% or more, and may be 5 mass% or more or 10 mass% or more, based on the total mass of the catalyst composition, from the viewpoint of further reducing color change over time of the blocked polyisocyanate composition and coloration of the coating film. The content of the hydroxylamine compound may be 90 mass% or less, and may be 80 mass% or less or 70 mass% or less, based on the total mass of the catalyst composition, from the viewpoint of easily obtaining a coating material composition having better low-temperature curability. From these viewpoints, the content of the hydroxylamine compound may be, for example, 1 to 90 mass%, 5 to 80 mass%, or 10 to 70 mass% based on the total mass of the catalyst composition.

The ratio of the content of the hydroxylamine compound to the content of the quaternary ammonium salt (content of hydroxylamine compound/content of quaternary ammonium salt) may be 0.05 to 6.0 in terms of mass ratio. When the above ratio is 0.05 or more, there is a tendency to further reduce coloration of the coating film, and when the above ratio is 6.0 or less, there is a tendency to easily obtain a coating material composition having better low-temperature curability. From these viewpoints, the above ratio may be 0.1 or more, 0.3 or more, 1.0 or more, 2.0 or more, 3.0 or more, or 4.0 or more, and may be 5.5 or less, 5.0 or less, 4.5 or less, 3.0 or less, 1.0 or less, or 0.2 or less, and may be 0.1 to 6.0, 0.3 to 6.0, 1.0 to 6.0, 2.0 to 6.0, 3.0 to 6.0, or 4.0 to 6.0, and may be 0.05 to 5.5, 0.05 to 5.0, 0.05 to 4.5, 0.05 to 3.0, 0.05 to 1.0, or 0.05 to 0.2.

### [Oxime compound]

The oxime compound is, for example, a compound represented by the following formula (3).

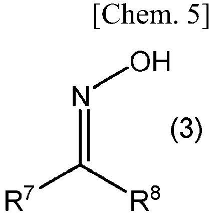

In formula (3), R⁷ and R⁸ each independently represent a hydrogen atom or a linear or branched hydrocarbon group having 1 to 16 carbon atoms which may have one or more substituents. In formula (3), R⁷ and R⁸ may be linked to each other to form a ring. The hydrocarbon groups represented by R⁷ and R⁸ are the same as the above-described hydrocarbon groups represented by R⁵ and R⁶, and the same effects can be expected from the same characteristics as the hydrocarbon groups represented by R⁵ and R⁶.

Specific examples of oxime compounds include methyl ethyl ketoxime, acetaldoxime, acetoxime, 2-butanone oxime, cyclohexanone oxime, acetone oxime, diacetyl monoxime, benzophenone oxime, 2,2,6,6-tetramethylcyclohexanone oxime, diisopropyl ketone oxime, methyl t-butyl ketone oxime, diisobutyl ketone oxime, methyl isobutyl ketone oxime, methyl isopropyl ketone oxime, methyl 2,4-dimethylpentyl ketone oxime, methyl 3-ethylheptyl ketone oxime, methyl isoamyl ketone oxime, n-amyl ketone oxime, 2,2,4,4-tetramethyl-1,3-cyclobutanedione monooxime, 4,4'-dimethoxybenzophenone oxime, 2-heptanone oxime, and the like.

The oxime compound contained in the catalyst composition may be one type or two or more types.

The content of the oxime compound may be 1 mass% or more, and may be 5 mass% or more or 10 mass% or more, based on the total mass of the catalyst composition, from the viewpoint of further reducing color change over time of the blocked polyisocyanate composition and coloration of the coating film. The content of the oxime compound may be 90 mass% or less, and may be 80 mass% or less or 70 mass% or less, based on the total mass of the catalyst composition, from the viewpoint of easily obtaining a coating material composition having better low-temperature curability. From these viewpoints, the content of the oxime compound may be, for example, 1 to 90 mass%, 5 to 80 mass%, or 10 to 70 mass%, based on the total mass of the catalyst composition.

The ratio of the content of the oxime compound to the content of the quaternary ammonium salt (content of oxime compound/content of quaternary ammonium salt) may be 0.05 to 6.0 in terms of mass ratio. When the above ratio is 0.05 or more, there is a tendency to further reduce coloration of the coating film, and when the above ratio is 6.0 or less, there is a tendency to easily obtain a coating material composition having better low-temperature curability. From these viewpoints, the above ratio may be 0.1 or more, 0.3 or more, 1.0 or more, 2.0 or more, 3.0 or more, or 4.0 or more, and may be 5.5 or less, 5.0 or less, 4.5 or less, 3.0 or less, 1.0 or less, or 0.2 or less, and may be 0.1 to 6.0, 0.3 to 6.0, 1.0 to 6.0, 2.0 to 6.0, 3.0 to 6.0, or 4.0 to 6.0, and may be 0.05 to 5.5, 0.05 to 5.0, 0.05 to 4.5, 0.05 to 3.0, 0.05 to 1.0, or 0.05 to 0.2.

The content of nitrogen-containing compound (A) may be 1 mass% or more, and may be 5 mass% or more or 10 mass% or more, based on the total mass of the catalyst composition, from the viewpoint of further reducing color change over time of the blocked polyisocyanate composition and coloration of the coating film. The content of nitrogen-containing compound (A) may be 90 mass% or less, and may be 80 mass% or less or 70 mass% or less, based on the total mass of the catalyst composition, from the viewpoint of easily obtaining a coating material composition having better low-temperature curability. From these viewpoints, the content of nitrogen-containing compound (A) may be, for example, 1 to 90 mass%, 5 to 80 mass%, or 10 to 70 mass%, based on the total mass of the catalyst composition.

The ratio of the content of nitrogen-containing compound (A) to the content of the quaternary ammonium salt (content of nitrogen-containing compound (A)/content of quaternary ammonium salt) may be 0.05 to 6.0 in terms of mass ratio. When the above ratio is 0.05 or more, there is a tendency to further reduce coloration of the coating film, and when the above ratio is 6.0 or less, there is a tendency to easily obtain a coating material composition having better low-temperature curability. From these viewpoints, the above ratio may be 0.1 or more, 0.3 or more, 1.0 or more, 2.0 or more, 3.0 or more, or 4.0 or more, and may be 5.5 or less, 5.0 or less, 4.5 or less, 3.0 or less, 1.0 or less, or 0.2 or less, and may be 0.1 to 6.0, 0.3 to 6.0, 1.0 to 6.0, 2.0 to 6.0, 3.0 to 6.0, or 4.0 to 6.0, and may be 0.05 to 5.5, 0.05 to 5.0, 0.05 to 4.5, 0.05 to 3.0, 0.05 to 1.0, or 0.05 to 0.2.

### (Other components)

The catalyst composition may further contain components other than the quaternary ammonium salt and nitrogen-containing compound (A). The content of components other than the quaternary ammonium salt and nitrogen-containing compound (A) in the catalyst composition may be 5 mass% or less, and may be 1 mass% or less or 0.1 mass% or less, based on the total mass of the catalyst composition.

The catalyst composition may contain, for example, a blocking agent dissociation catalyst other than the quaternary ammonium salt. The content of the blocking agent dissociation catalyst other than the quaternary ammonium salt in the catalyst composition may be 5 mass% or less, and may be 1 mass% or less or 0.1 mass% or less, based on the total mass of the catalyst composition.

### (Preparation method)

The catalyst composition can be prepared by mixing the quaternary ammonium salt, nitrogen-containing compound (A), and optionally other components.

### <Blocked polyisocyanate composition>

One embodiment of the present disclosure is a blocked polyisocyanate composition containing a blocked polyisocyanate and the catalyst composition of the above embodiment. In other words, the blocked polyisocyanate composition of one embodiment of the present disclosure contains a blocked polyisocyanate, a quaternary ammonium salt, and nitrogen-containing compound (A).

Since the above blocked polyisocyanate composition contains the catalyst composition of the above embodiment, it can impart low-temperature curability to a coating material composition. In addition, for the same reason, according to the above blocked polyisocyanate composition, a coating material composition that is unlikely to undergo color change during the production of a coating film (before and after curing of the coating film) can be obtained.

### (Blocked polyisocyanate)

A blocked polyisocyanate is a compound derived from a polyisocyanate that does not have isocyanate groups blocked by a blocking agent (hereinafter also referred to as "unblocked polyisocyanate"), and has at least a structure derived from the unblocked polyisocyanate and isocyanate groups blocked with a blocking agent (hereinafter also referred to as "blocked isocyanate groups").

### [Unblocked polyisocyanate]

An unblocked polyisocyanate is a compound having a plurality of isocyanate groups (free isocyanate groups). Examples of unblocked polyisocyanates include aromatic polyisocyanates, aliphatic polyisocyanates, alicyclic polyisocyanates, and derivatives of these polyisocyanates. Examples of derivatives include an isocyanurate form, an allophanate form, a biuret form, and the like. The derivative may be an isocyanate group-containing prepolymer obtained by the reaction of the above polyisocyanate and a polyol, or may be a derivative of the prepolymer (for example, an isocyanurate form, an allophanate form, a biuret form, etc.). As the polyol, for example, a diol having 2 to 9 carbon atoms is used. Examples of such diols include ethylene glycol, 1,2-propanediol, 1,3-propanediol, 1,2-butanediol, 1,3-butanediol, 1,4-butanediol, and 1,5-pentanediol.

The unblocked polyisocyanate may be free of an aromatic ring from the viewpoint of improving the yellowing resistance of the cured coating film. That is, the unblocked polyisocyanate may be a non-aromatic polyisocyanate. Examples of non-aromatic polyisocyanates include aliphatic polyisocyanates such as hexamethylene diisocyanate, tetramethylene diisocyanate, 2-methyl-pentane-1,5-diisocyanate, 3-methyl-pentane-1,5-diisocyanate, lysine triisocyanate, and trioxyethylene diisocyanate; alicyclic polyisocyanates such as isophorone diisocyanate, cyclohexyl diisocyanate, hydrogenated diphenylmethane diisocyanate, norbornane diisocyanate, hydrogenated tolylene diisocyanate, hydrogenated xylene diisocyanate, and hydrogenated tetramethylxylene diisocyanate; and derivatives thereof.

The unblocked polyisocyanate may contain an aliphatic polyisocyanate having an aliphatic hydrocarbon group having 4 to 6 carbon atoms or a derivative thereof from the viewpoint of further improving low-temperature curability. In other words, the blocked polyisocyanate may have a structure derived from an aliphatic polyisocyanate having an aliphatic hydrocarbon group having 4 to 6 carbon atoms or a derivative thereof. When the aliphatic polyisocyanate having an aliphatic hydrocarbon group having 4 to 6 carbon atoms is hexamethylene diisocyanate, the effect of improving low-temperature curability tends to be further enhanced. From this viewpoint, the unblocked polyisocyanate may contain hexamethylene diisocyanate or a derivative thereof, and the blocked polyisocyanate may have a structure derived from hexamethylene diisocyanate or a derivative thereof. The derivative of hexamethylene diisocyanate may be at least one selected from the group consisting of an isocyanurate form, an allophanate form, and a biuret form. These derivatives may also be derivatives of the above-described isocyanate group-containing prepolymer. Among these, when the derivative of hexamethylene diisocyanate is an isocyanurate form, a higher coating film hardness tends to be obtained. When the unblocked polyisocyanate contains an isocyanurate form, from the viewpoint of further improving coating film hardness, the content of isocyanurate trimer based on the total mass of the unblocked polyisocyanate (isocyanurate trimer content) may be 50 mass% or more, and the content ratio of isocyanurate groups to the total (100 mol%) of isocyanurate groups and allophanate groups in the unblocked polyisocyanate (isocyanurate group content ratio) may be more than 80 mol%. The upper limit of the isocyanurate trimer content may be 80 mass%, and the upper limit of the isocyanurate group content ratio may be 99 mol%.

### [Blocked isocyanate groups]

A blocked isocyanate group is an isocyanate group blocked with a blocking agent, and has a structure derived from the blocking agent.

Examples of blocking agents include alcohol-based blocking agents such as methanol, ethanol, n-butanol, isobutanol, 2-ethylhexanol, butyl cellosolve, propylene glycol monomethyl ether, ethylene glycol, and benzyl alcohol; phenol-based blocking agents such as phenol, cresol, ethylphenol, butylphenol, and 2-hydroxypyridine; lactam-based blocking agents such as ε-caprolactam, δ-valerolactam, and γ-butyrolactam; oxime-based blocking agents such as formaldoxime, acetaldoxime, acetone oxime, methyl ethyl ketoxime, methyl isobutyl ketoxime, and cyclohexanone oxime; imidazole-based blocking agents such as imidazole, 2-methylimidazole, 4-methylimidazole, 2,4-dimethylimidazole, 2-ethylimidazole, 2-propylimidazole, 2-isopropylimidazole, 4-methyl-2-propylimidazole, 2-phenylimidazole, 4-phenylimidazole, 5-phenylimidazole, 2-methyl-4-phenylimidazole, 2-ethyl-4-methylimidazole, 2-undecylimidazole, and 2-heptadecylimidazole; pyrazole-based blocking agents such as 3,5-dimethylpyrazole, 3-methylpyrazole, and pyrazole; amine-based blocking agents such as diphenylamine, diisopropylamine, and isopropylethylamine; and triazole-based blocking agents such as triazole, 1,2,4-triazole, and 3,5-dimethyl-1,2,4-triazole. From the viewpoint of storage stability, an oxime-based blocking agent may be used. As the oxime-based blocking agent, methyl ethyl ketoxime is preferred. From the viewpoint of curability, a pyrazole-based blocking agent may be used. As the pyrazole-based blocking agent, 3,5-dimethylpyrazole is preferred.

From the above viewpoints, in one embodiment, the blocked polyisocyanate may have at least one group selected from the group consisting of an isocyanate group blocked with an oxime-based blocking agent and an isocyanate group blocked with a pyrazole-based blocking agent.

The blocked polyisocyanate may have free isocyanate groups, but when the blocked polyisocyanate does not have free isocyanate groups, storage stability can be further improved. From the viewpoint of further improving storage stability, all of the effective isocyanate groups in the blocked polyisocyanate may be blocked isocyanate groups. Here, effective isocyanate groups mean both free isocyanate groups and blocked isocyanate groups.

The blocked polyisocyanate can be obtained, for example, by reacting a polyisocyanate having free isocyanate groups, such as the above unblocked polyisocyanate, with the above blocking agent. That is, the blocked polyisocyanate may be a reaction product of a polyisocyanate having free isocyanate groups and the above blocking agent. The polyisocyanate having free isocyanate groups and the blocking agent may each be used alone or in combination of two or more. However, when an aromatic polyisocyanate is not used as the polyisocyanate having free isocyanate groups, the yellowing resistance of the cured coating film can be further improved.

The blocked polyisocyanate may be a compound derived from a reaction product of a polyisocyanate having free isocyanate groups and a blocking agent. The blocked polyisocyanate may be, for example, a compound obtained by reacting a reaction product of a polyisocyanate having free isocyanate groups and a blocking agent with a compound capable of reacting with the free isocyanate groups in the reaction product (for example, an active hydrogen group-containing compound, etc.).

The reaction between a polyisocyanate having free isocyanate groups and a blocking agent can be performed in accordance with the reaction conditions of a normal blocking reaction. The reaction may be performed at room temperature or may be performed while heating. Regardless of whether heating is performed, the temperature of the reaction solution may be, for example, 20 to 200°C.

The blocked polyisocyanate may be used alone or in combination of two or more. For example, two or more blocked polyisocyanates derived from different types of unblocked polyisocyanates may be used in combination.

The content of the blocked polyisocyanate may be 40 mass% or more, and may be 60 mass% or more or 80 mass% or more, based on the total solid content of the blocked polyisocyanate composition, from the viewpoint of easily obtaining a coating material composition having better low-temperature curability. The content of the blocked polyisocyanate may be less than 100 mass%, and may be 95 mass% or less or 90 mass% or less, based on the total solid content of the blocked polyisocyanate composition, from the viewpoint of improving the storage stability of the coating material. From these viewpoints, the content of the blocked polyisocyanate may be, for example, 40 mass% or more and less than 100 mass%, 60 to 95 mass%, or 80 to 90 mass%, based on the total solid content of the blocked polyisocyanate composition. Here, the total solid content of the blocked polyisocyanate composition means, when the blocked polyisocyanate composition contains a solvent, the total amount of the blocked polyisocyanate composition minus the amount of the solvent, and when the blocked polyisocyanate composition does not contain a solvent, the total amount of the blocked polyisocyanate composition.

### (Catalyst composition)

The catalyst composition is as described in the above embodiment and contains a quaternary ammonium salt and nitrogen-containing compound (A). The ratio of the content of nitrogen-containing compound (A) to the content of the quaternary ammonium salt in the blocked polyisocyanate composition may be in the same range as the range exemplified as the ratio of the content of nitrogen-containing compound (A) to the content of the quaternary ammonium salt in the catalyst composition. The same applies to the ratio of the content of the hydroxyamine compound to the content of the quaternary ammonium salt and the ratio of the content of the oxime compound to the content of the quaternary ammonium salt.

The content of the catalyst composition in the blocked polyisocyanate composition may be adjusted so that the content of the quaternary ammonium salt falls within the following range. The content of the quaternary ammonium salt may be 0.0001 parts by mass or more, and may be 0.001 parts by mass or more or 0.01 parts by mass or more, relative to 100 parts by mass of the blocked polyisocyanate, from the viewpoint of easily obtaining a coating material composition having better low-temperature curability. The content of the quaternary ammonium salt may be 40 parts by mass or less, and may be 30 parts by mass or less or 20 parts by mass or less, relative to 100 parts by mass of the blocked polyisocyanate, from the viewpoint of improving the storage stability of the coating material. From these viewpoints, the content of the quaternary ammonium salt may be, for example, 0.0001 to 40 parts by mass relative to 100 parts by mass of the blocked polyisocyanate.

### (Other components)

The blocked polyisocyanate composition may further contain, as other components, components other than the above-described components that may be contained in the blocked polyisocyanate and the catalyst composition. Examples of other components include additives such as pigments, dispersion stabilizers, viscosity modifiers, leveling agents, anti-gelling agents, light stabilizers, antioxidants, ultraviolet absorbers, heat resistance improvers, inorganic and organic fillers, plasticizers, lubricants, antistatic agents, reinforcing materials, and catalysts.

The blocked polyisocyanate composition may contain a solvent as another component. Examples of solvents include benzene, toluene, xylene, cyclohexane, acetone, methyl ethyl ketone, methyl isobutyl ketone, ethyl acetate, n-butyl acetate, cellosolve acetate, propylene glycol monomethyl ether acetate, diethylene glycol dimethyl ether, and 1,4-dioxane. These solvents may be used alone or in combination of two or more. The content of the solvent may be 0 to 95 mass%, and may be 5 to 90 mass% or 10 to 80 mass%, based on the total mass of the blocked polyisocyanate composition.

The blocked polyisocyanate composition may contain an unblocked polyisocyanate (for example, a polyisocyanate remaining as an unreacted product) or may contain an unreacted blocking agent. The content of the unblocked polyisocyanate contained in the blocked polyisocyanate composition may be 5 mass% or less, and may be 0 mass%, based on the total solid content of the blocked polyisocyanate composition. The content of the unreacted blocking agent contained in the blocked polyisocyanate composition may be 5 mass% or less, and may be 0 mass%, based on the total solid content of the blocked polyisocyanate composition.

The effective isocyanate group content of the blocked polyisocyanate composition (hereinafter referred to as "effective NCO content") may be 4 to 28 mass%, and may be 5 to 22 mass% or 6 to 16 mass%, from the viewpoint of further improving the curability of the coating material. Here, the effective NCO content is the isocyanate groups present in the blocked polyisocyanate composition that can participate in crosslinking reactions, expressed in mass%, and can be rephrased as the content ratio of free isocyanate groups in the polyisocyanate composition obtained by dissociating the blocking agent from the blocked polyisocyanate, relative to the total mass of the blocked polyisocyanate composition (free NCO content). The free NCO content can be determined by reacting the isocyanate groups in the measurement sample (the polyisocyanate composition obtained by dissociating the blocking agent from the blocked polyisocyanate) with an excess of a secondary amine and then back-titrating the unreacted secondary amine with hydrochloric acid.

The blocked polyisocyanate composition described above can be prepared by mixing the above blocked polyisocyanate, the above catalyst composition prepared in advance, and optionally other components. The blocked polyisocyanate composition can also be prepared by mixing the blocked polyisocyanate, the quaternary ammonium salt, nitrogen-containing compound (A), and optionally other components. The blocked polyisocyanate composition is used, for example, as a curing agent for a coating material composition (for example, a low-temperature curable coating material composition). That is, another embodiment of the present disclosure is a curing agent for a coating material (for example, a low-temperature curable coating material) composed of the above blocked polyisocyanate composition.

### <Coating material composition>

Another embodiment of the present disclosure is a coating material composition containing a main agent and a curing agent. The coating material composition contains a blocked polyisocyanate and the catalyst composition of the above embodiment. In other words, the coating material composition of one embodiment of the present disclosure contains a main agent and a curing agent, and contains, as the main agent, the curing agent, or another agent, a blocked polyisocyanate, a quaternary ammonium salt, and nitrogen-containing compound (A). The coating material composition may contain the above blocked polyisocyanate composition. The details of the blocked polyisocyanate contained in the coating material composition are the same as the details of the blocked polyisocyanate contained in the above blocked polyisocyanate composition. In addition, the ratio of the content of nitrogen-containing compound (A) to the content of the quaternary ammonium salt in the coating material composition may be in the same range as the range exemplified as the ratio of the content of nitrogen-containing compound (A) to the content of the quaternary ammonium salt in the catalyst composition. The same applies to the ratio of the content of the hydroxyamine compound to the content of the quaternary ammonium salt and the ratio of the content of the oxime compound to the content of the quaternary ammonium salt.

The above coating material composition may be a one-component composition in which all constituent components are contained in one liquid, or may be a multi-component composition in which the constituent components are present separately in a plurality of liquids. The multi-component coating material composition may include a first liquid containing the main agent and a second liquid containing the curing agent. The blocked polyisocyanate is contained as a curing agent in the above second liquid, but the catalyst composition may be contained in either the first liquid or the second liquid. Similarly, when the coating material composition contains other components that may be contained in the above blocked polyisocyanate composition, these components may be contained in either the first liquid or the second liquid. When the catalyst composition is contained in the second liquid, the blocked polyisocyanate composition of the above embodiment may be used as the second liquid.

Since the above coating material composition contains a blocked polyisocyanate and the catalyst composition of the above embodiment, it has excellent low-temperature curability. For the same reason, the above coating material composition is unlikely to undergo color change during the production of a coating film (before and after curing of the coating film). Therefore, according to the above coating material composition, a coating film with little coloration can be easily formed.

The main agent contains, for example, an active hydrogen group-containing compound. Examples of active hydrogen groups include a hydroxy group, an amino group, and the like. The average number of functional groups (average number of active hydrogen groups) of the active hydrogen group-containing compound is 2 or more, and is, for example, 2 to 50. Examples of active hydrogen-containing compounds having such an average number of functional groups include polyols, polyamines, amino alcohols, and the like. Among these, when the main agent contains a polyol as the active hydrogen group-containing compound, better low-temperature curability is easily obtained, and a coating film with less coloration is also easily obtained.

The number average molecular weight of the active hydrogen group-containing compound is, for example, 500 to 20000, and may be 500 to 10000. Examples of active hydrogen group-containing compounds having such a number average molecular weight include polyurethane resins, polyamide resins, saturated or unsaturated polyester resins, alkyd resins modified with saturated or unsaturated fatty acids, acrylic resins, fluororesins, epoxy resins, and cellulose resins (all of which are resins having active hydrogen groups). Furthermore, in consideration of coating film performance such as gloss, fullness, hardness, durability, flexibility, and drying properties, as well as cost, at least one compound selected from the group consisting of saturated or unsaturated polyester resins, alkyd resins modified with saturated or unsaturated fatty acids, and acrylic resins may be used.

The blending ratio of the main agent and the curing agent in the coating material composition may be adjusted based on the ratio of the total amount of effective isocyanate groups in the curing agent to the total amount of active hydrogen groups in the main agent. The ratio of the total amount of effective isocyanate groups in the curing agent to the total amount of active hydrogen groups in the main agent may be 1/9 to 9/1 in terms of molar ratio, and may be 2/8 to 8/2. When the above molar ratio is within the above range, better curability is obtained.

The content of the catalyst composition in the coating material composition may be adjusted, similarly to the content of the catalyst composition in the above blocked polyisocyanate composition, so that the content of the quaternary ammonium salt relative to 100 parts by mass of the blocked polyisocyanate falls within the above-described range (for example, 0.0001 to 40 parts by mass).

The coating material composition can be used as a top and middle coat for automobiles, a chipping-resistant coating material, an electrodeposition coating material, a coating material for automobile parts, a coating material for automobile repair, a precoated metal or rustproof steel sheet for metal products such as home appliances and office equipment, a coating material for building materials, a coating material for plastics, an adhesive, an adhesion-imparting agent, a sealing agent, and the like.

### <Coating film and method for forming coating film>

Another embodiment of the present disclosure is a coating film formed from the coating material composition of the above embodiment. In addition, another embodiment of the present disclosure is a method for forming a coating film, including a step of applying the coating material composition of the above embodiment to an object to be coated and curing a coating film composed of the coating material composition (an uncured coating film).

The coating film may be an uncured coating film composed of a mixture of the main agent and the curing agent in the coating material composition of the above embodiment, or may be a coating film formed by curing the uncured coating film (a cured coating film). The thickness of the coating film is, for example, 5 to 40 µm. The coating film may be a thin film having a thickness of less than 20 µm.

The coating material composition may be applied by a known method such as roll coating, curtain flow coating, spray coating, electrostatic coating, bell coating, or electrodeposition coating. The amount of the coating material composition applied, the thickness of the coating film, and the like may be appropriately determined according to the material of the surface to be coated.

The curing of the coating film composed of the coating material composition (the uncured coating film) may be performed by heating the coating film. The heating temperature (baking temperature) may be, for example, 200°C or lower, and the heating time (baking time) may be, for example, 10 to 180 minutes. According to the coating material composition of the present embodiment, a cured coating film having good hardness can be formed even when baking is performed at a low temperature of 100°C or lower (for example, 60 to 100°C).

Examples of objects to be coated include molded articles molded from materials such as stainless steel, phosphate-treated steel, zinc steel, iron, copper, aluminum, brass, glass, acrylic polyols, polycarbonate resins, polyethylene terephthalate resins, polyethylene naphthalate resins, polybutylene phthalate resins, polystyrene resins, AS resins, ABS resins, polycarbonate-ABS resins, 6-nylon resins, 6,6-nylon resins, MXD6 nylon resins, polyvinyl chloride resins, polyvinyl alcohol resins, polyurethane resins, phenolic resins, melamine resins, polyacetal resins, chlorinated polyolefin resins, polyolefin resins, polyamide resins, polyether ether ketone resins, polyphenylene sulfide resins, NBR resins, chloroprene resins, SBR resins, and SEBS resins, and surface-treated products of the molded articles. The surface-treated product may be a molded article (surface-treated molded article) of an olefin resin such as polyethylene or polypropylene that has been subjected to a surface treatment such as a corona discharge treatment.

### [Examples]

Hereinafter, the content of the present invention will be described in more detail using examples and comparative examples, but the present invention is not limited to the following examples.

### <Synthesis Example 1>

### (Synthesis of quaternary ammonium salt S-1)

15.4 g of dimethylmono-n-octylamine (manufactured by Tokyo Chemical Industry Co., Ltd.), 13.2 g of dimethyl carbonate (manufactured by Tokyo Chemical Industry Co., Ltd.), and 31.4 g of methanol (manufactured by Kishida Chemical Co., Ltd.) were charged into a 200 mL autoclave, and the mixture was stirred and reacted at 110°C for 12 hours. The reaction solution was collected in a container (single-neck pear-shaped flask), and the inside of the container was depressurized at 30°C to remove unreacted dimethyl carbonate and methanol, thereby obtaining 24.2 g of trimethylmono-n-octylammonium monomethyl carbonate (quaternary ammonium salt S-1).

### <Synthesis Example 2>

### (Preparation of polyisocyanate A-1)

995 g of hexamethylene diisocyanate (hereinafter referred to as HDI), 5.0 g of 1,3-butanediol (manufactured by Tokyo Chemical Industry Co., Ltd.), and 0.3 g of phenol (manufactured by Tokyo Chemical Industry Co., Ltd.) were charged into a four-neck flask equipped with a stirrer, a thermometer, a heating device, a nitrogen seal tube, and a condenser, and a urethanization reaction was performed at 80°C for 2 hours under a nitrogen gas flow. Thereafter, 0.04 g of potassium 2-ethylhexanoate (manufactured by Tokyo Chemical Industry Co., Ltd.), which is an isocyanuration catalyst, was added, and an isocyanuration reaction was performed at 70°C for 2 hours. After the NCO content reached 40.0 mass%, 0.15 g of JP-508 (manufactured by Johoku Chemical Co., Ltd.) was added to terminate the reaction, and the reaction solution was cooled to room temperature. The reaction solution was subjected to thin film distillation at a temperature of 130°C and a pressure of 0.04 kPa to remove unreacted HDI, thereby obtaining purified polyisocyanate A-1. The NCO content of polyisocyanate A-1 was 21.8 mass%, and the viscosity at 25°C was approximately 2,500 mPa·s.

### (¹H-NMR: Measurement of isocyanurate group content ratio)

¹H-NMR measurement of polyisocyanate A-1 was performed to determine the isocyanurate group content ratio (the content ratio of isocyanurate groups to the total (100 mol%) of isocyanurate groups and allophanate groups). Specifically, the isocyanurate group content ratio was calculated from the signal area of hydrogen atoms of methylene groups adjacent to nitrogen atoms of isocyanurate groups near 3.7 ppm and the signal area of hydrogen atoms bonded to nitrogen atoms of allophanate groups near 8.5 ppm. The isocyanurate group content ratio was 89 mol%. Here, the ¹H-NMR measurement was performed under the following measurement conditions.

### [Measurement conditions]

(1) Measurement instrument: ECX400M (manufactured by JEOL Ltd., ¹H-NMR)
(2) Measurement temperature: 23°C
(3) Sample concentration: 0.1 g/1 mL
(4) Number of integrations: 16
(5) Relaxation time: 5 seconds
(6) Solvent: deuterated dimethyl sulfoxide
(7) Chemical shift reference: signal of hydrogen atoms of methyl groups in deuterated dimethyl sulfoxide (2.5 ppm)

### <Examples 1 to 6>

### (Preparation of catalyst composition)

N,N-diethylhydroxylamine (manufactured by Tokyo Chemical Industry Co., Ltd., "DEHA" in the table), which is a hydroxylamine compound, and methyl ethyl ketoxime (manufactured by Ube Industries, Ltd., "MEKO" in the table), which is an oxime compound, were prepared as nitrogen-containing compound (A), and nitrogen-containing compound (A) and quaternary ammonium salt S-1 were mixed at the mass ratio R (nitrogen-containing compound (A)/quaternary ammonium salt) shown in Table 1 below, thereby preparing the catalyst compositions of Examples 1 to 6 (catalyst compositions 1 to 6).

### (Discoloration resistance evaluation)

The catalyst compositions of Examples 1 to 6 were stored at 45°C for 48 hours, and the b* value of the catalyst compositions in the CIE Lab standard was measured before and after storage using a spectrophotocolorimeter COH7700 (manufactured by Nippon Denshoku Industries Co., Ltd.). Furthermore, the "rate of change in b* value" was determined from the b* values before and after storage (initial b* value and b* value after storage) by the following formula, and the resistance of the catalyst compositions to discoloration over time (discoloration resistance) was evaluated based on the rate of change. 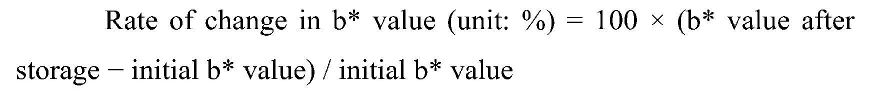 Rate of change in b* value (unit: %) = 100 × (b* value after storage - initial b* value) / initial b* value

The evaluation criteria are shown below. When the evaluation was B, the catalyst composition was evaluated as having sufficient discoloration resistance.
A: rate of change in b* value is 0% or more and less than 30%
B: rate of change in b* value is 30% or more and less than 60%
C: rate of change in b* value is 60% or more

### (Preparation of blocked polyisocyanate composition)

Using the catalyst compositions of Examples 1 to 6, respectively, the blocked polyisocyanate compositions of Examples 1 to 6 (compositions containing a blocked polyisocyanate and a catalyst composition) were prepared by the following method.

515 g of polyisocyanate A-1 and 250 g of butyl acetate were charged into a four-neck flask equipped with a stirrer, a thermometer, a heating device, a nitrogen seal tube, and a condenser and stirred for 30 minutes, and then 234 g of methyl ethyl ketoxime (manufactured by Ube Industries, Ltd., "MEKO" in the table) (equivalent ratio relative to the amount of polyisocyanate A-1 mixed: 1.0) was charged in three portions so that the temperature did not exceed 80°C. Thereafter, the mixture was reacted at 70°C for 2 hours, and when the peak of the NCO group (near 2270 cm⁻¹) disappeared as confirmed by infrared absorption spectroscopy (IR measurement), the mixture was cooled to room temperature, 22.5 g of the catalyst composition was added, and the mixture was stirred for 30 minutes. Through the above operations, the blocked polyisocyanate compositions of Examples 1 to 6 were obtained, respectively.

### (Discoloration resistance evaluation)

The resistance of the blocked polyisocyanate compositions obtained in Examples 1 to 6 to discoloration over time was evaluated by storing the blocked polyisocyanate compositions at 45°C for one week, measuring the b* value of the blocked polyisocyanate compositions in the CIE Lab standard before and after storage, determining the rate of change in the b* values before and after storage (initial b* value and b* value after storage) by the following formula, and evaluating based on the rate of change. Here, the above b* value was measured using a spectrophotocolorimeter COH7700 (manufactured by Nippon Denshoku Industries Co., Ltd.). 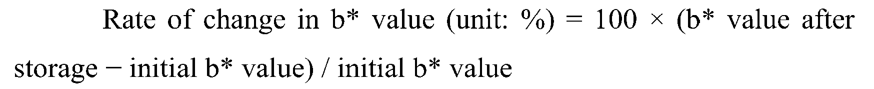 Rate of change in b* value (unit: %) = 100 × (b* value after storage - initial b* value) / initial b* value

The evaluation criteria are shown below.
A: rate of change in b* value is 0% or more and less than 150%
B: rate of change in b* value is 150% or more and less than 200%
C: rate of change in b* value is 200% or more

### (Preparation of coating material composition)

Using the blocked polyisocyanate compositions of Examples 1 to 6, respectively, the coating material compositions of Examples 1 to 6 were prepared. Specifically, the coating material compositions were prepared by mixing 63.7 g of Acrydic A-801 (manufactured by DIC Corporation, acrylic polyol, solid content concentration 50 mass%, hydroxyl value 50 mg KOH/g, product name), which is a main agent, 10.6 g of the blocked polyisocyanate composition, which is a curing agent, and 25.2 g of butyl acetate (manufactured by Kishida Chemical Co., Ltd.).

### (Production of coating film)

Using the coating material compositions of Examples 1 to 6, the coating material compositions were applied to objects to be coated under the following conditions and cured to obtain the coating films (cured coating films) of Examples 1 to 6, respectively.

### (Low-temperature curability evaluation)

### [Gel fraction measurement]

The coating material composition prepared above was applied to a release paper so that the thickness before drying was 200 µm under the following coating conditions. The obtained coating film was left to stand at room temperature for 60 minutes and then baked by heating in a constant temperature bath at 80°C for 20 minutes. The baked coating film (cured coating film) was immersed in methyl ethyl ketone at room temperature for 24 hours, and the gel fraction was determined. The gel fraction was calculated by the following formula. The results are shown in Table 1. 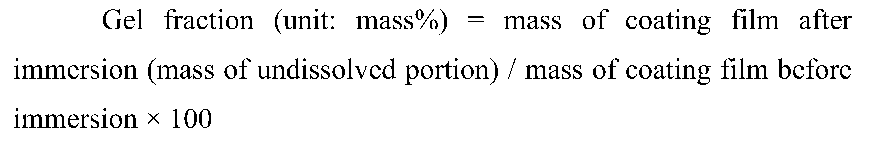 Gel fraction (unit: mass%) = mass of coating film after immersion (mass of undissolved portion) / mass of coating film before immersion × 100

### [Coating conditions]

· Coating method: using an applicator
· Humidity conditions: 50% RH
· Temperature conditions: 23°C
· Drying (curing) conditions: forced drying at 80°C for 20 minutes
· Film thickness: approximately 200 µm

### <Example 7>

### (Preparation of blocked polyisocyanate composition)

500 g of polyisocyanate A-1 and 250 g of butyl acetate were charged into a four-neck flask equipped with a stirrer, a thermometer, a heating device, a nitrogen seal tube, and a condenser and stirred for 30 minutes, and then 249 g of 3,5-dimethylpyrazole (manufactured by Tokyo Chemical Industry Co., Ltd., "DMP" in the table) (equivalent ratio relative to the amount of polyisocyanate A-1 mixed: 1.0) was charged in three portions so that the temperature did not exceed 80°C. Thereafter, the mixture was reacted at 70°C for 2 hours, and when the peak of the NCO group (near 2270 cm⁻¹) disappeared as confirmed by infrared absorption spectroscopy (IR measurement), the mixture was cooled to room temperature, 22.5 g of the catalyst composition of Example 4 (catalyst composition 4) was added, and the mixture was stirred for 30 minutes. Through the above operations, the blocked polyisocyanate composition of Example 7 was obtained. The obtained blocked polyisocyanate composition was subjected to discoloration resistance evaluation in the same manner as in Examples 1 to 6.

### (Preparation of coating material composition)

Using the blocked polyisocyanate composition of Example 7, the coating material composition of Example 7 was prepared. Specifically, the coating material composition was prepared by mixing 63.6 g of Acrydic A-801, which is a main agent, 10.9 g of the blocked polyisocyanate composition, which is a curing agent, and 25.5 g of butyl acetate.

### (Production and evaluation of coating film)

A coating film (cured coating film) was produced and low-temperature curability evaluation (measurement of gel fraction) was performed in the same manner as in Example 1, except that the coating material composition of Example 7 was used as the coating material composition. The results are shown in Table 1.

### <Comparative Example 1>

In Comparative Example 1, the hydroxylamine compound and the oxime compound were not used, and quaternary ammonium salt S-1 was used as is as the catalyst. After the discoloration resistance of the catalyst of Comparative Example 1 (quaternary ammonium salt S-1) was evaluated in the same manner as in Examples 1 to 6, the preparation of the blocked polyisocyanate composition, the discoloration resistance evaluation of the blocked polyisocyanate composition, the preparation of the coating material composition, the production of the coating film, and the low-temperature curability evaluation were performed in the same manner as in the above Examples 1 to 6, except that quaternary ammonium salt S-1 was used instead of the catalyst composition. The results are shown in Table 1.

**[Table 1]**

| | | | Example 1 | Example 2 | Example 3 | Example 4 | Example 5 | Example 6 | Example 7 | Comparative Example 1 |
|---|---|---|---|---|---|---|---|---|---|---|
| Catalyst composition | Type of composition | | 1 | 2 | 3 | 4 | 5 | 6 | 4 | - |
| | Nitrogen-containing compound (A) | | DEHA | | | | | MEKO | DEHA | None |
| | catalyst | Mass ratio R | 0.1 | 0.5 | 2 | 4.1 | 6 | 0.1 | 4.1 | - |
| | Discoloration resistance | Rate of change in b* value (%) | 45 | 90 | 65 | 15 | 10 | 25 | 15 | 45 |
| | | Evaluation | B | C | C | A | A | A | A | B |
| Blocked polyisocyanate composition | Type of blocking agent | | MEKO | | | | | | DMP | MEKO |
| | Discoloration resistance | Rate of change in b* value (%) | 145 | 130 | 110 | 130 | 160 | 170 | 70 | 280 |
| | | Evaluation | A | A | A | A | B | B | A | C |
| Coating film evaluation | Gel fraction (%) | | 85 | 85 | 85 | 85 | 80 | 85 | \| 85 | 85 |

## Claims

1. A catalyst composition used for dissociating a blocking agent from a blocked polyisocyanate,
comprising a quaternary ammonium salt and at least one nitrogen-containing compound selected from the group consisting of a hydroxylamine compound and an oxime compound.

2. The catalyst composition according to claim 1, wherein a ratio of a content of the nitrogen-containing compound to a content of the quaternary ammonium salt is 0.05 to 6.0 in terms of mass ratio.

3. The catalyst composition according to claim 1, wherein the quaternary ammonium salt comprises a quaternary ammonium cation represented by the following formula (1). 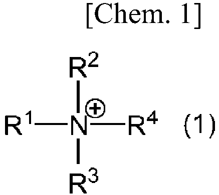 [In formula (1), R¹ represents an alkyl group having 1 to 16 carbon atoms which may have a hydroxy group, an amino group, or an alkoxy group as a substituent, and R² to R⁴ each independently represent an alkyl group having 1 to 8 carbon atoms.]

4. The catalyst composition according to claim 1, wherein the nitrogen-containing compound comprises a hydroxylamine compound represented by the following formula (2). 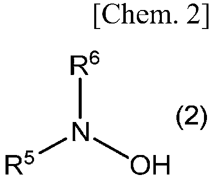
[In formula (2),
R⁵ and R⁶ each independently represent
a hydrogen atom, or
a linear or branched hydrocarbon group having 1 to 16 carbon atoms which may have one or more substituents,
and R⁵ and R⁶ may be linked to each other to form a ring.]

5. A blocked polyisocyanate composition comprising a blocked polyisocyanate and the catalyst composition according to any one of claims 1 to 4.

6. The blocked polyisocyanate composition according to claim 5, wherein a content of the quaternary ammonium salt is 0.0001 to 40 parts by mass relative to 100 parts by mass of the blocked polyisocyanate.

7. The blocked polyisocyanate composition according to claim 5, wherein the blocked polyisocyanate has a structure derived from an aliphatic polyisocyanate having an aliphatic hydrocarbon group having 4 to 6 carbon atoms or a derivative thereof.

8. The blocked polyisocyanate composition according to claim 5, wherein the blocked polyisocyanate has at least one group selected from the group consisting of an isocyanate group blocked with an oxime-based blocking agent and an isocyanate group blocked with a pyrazole-based blocking agent.

9. A coating material composition comprising a main agent and a curing agent,
comprising a blocked polyisocyanate and the catalyst composition according to any one of claims 1 to 4.

10. A coating film formed from the coating material composition according to claim 9.

11. A method for forming a coating film, comprising a step of applying the coating material composition according to claim 9 to an object to be coated and heating at 60 to 100°C to cure a coating film comprising the coating material composition.
